# FASCICULE DE BREVET EUROPEEN

(11) **EP 4 104 726 B1**
(45) Date de publication et mention de la délivrance du brevet: **06.08.2025**
(21) Numéro de dépôt: 22178589.2
(22) Date de dépôt: 13.06.2022
(51) Int. Cl.: A47J 43/06, A47J 43/07, A47J 44/02, A47J 43/044

(54) **BOÎTIER DE MOTEUR D'APPAREIL ÉLECTROMÉNAGER DE PRÉPARATION CULINAIRE**
MOTORGEHÄUSE EINES KÜCHENGERÄTS
DRIVING UNIT HOUSING OF A HOUSEHOLD COOKING APPLIANCE

(30) Priorité: 18.06.2021 FR 2106527
(43) Date de publication de la demande: 21.12.2022
(73) Titulaire: SEB S.A., 69130 Ecully (FR)
(72) Inventeur: FERRON, Jean-Baptiste, 69134 ECULLY CEDEX (FR); RETOUR, Stéphane, 69134 ECULLY CEDEX (FR); LEMERCIER, Michel, 69134 ECULLY CEDEX (FR)
(74) Mandataire: Regimbeau

(56) Documents cités:
- EP-A1- 3 287 054
- DE-U1- 202006 014 145
- US-A1- 2011 063 941

## Description

### DOMAINE DE L'INVENTION

La présente invention concerne un boitier motorisé d'appareil électroménager de préparation culinaire.

### ETAT DE LA TECHNIQUE

On connait des appareils électroménagers de préparation culinaire comprenant un boitier motorisé associé à un accessoire de travail à outil rotatif, dans lesquels le boîtier motorisé présente une sortie d'entrainement située sur la partie supérieure de l'appareil électroménager de préparation culinaire, et dans lesquels un dispositif de sécurité autorise l'entraînement en rotation de la sortie d'entrainement seulement si un accessoire de travail est monté sur la sortie d'entrainement ou si une trappe mobile ou amovible empêche l'accès à la sortie d'entrainement.

Les boitiers motorisés connus peuvent ainsi comporter un dispositif d'activation, qui permet d'activer la rotation de la sortie d'entrainement uniquement lorsque des conditions de sécurité sont remplies.

Le document DE 20 2006 014 145 U1 donne un exemple d'un tel appareil électroménager de préparation culinaire.

On connait des appareils électroménagers de préparation culinaire comprenant un boitier motorisé associé à plusieurs accessoires de travail à outil rotatif, dans lesquels le boîtier motorisé présente une première sortie d'entrainement et une deuxième sortie d'entrainement agencées pour être entrainées en rotation par un moteur, chaque sortie d'entraînement étant configurée pour recevoir un accessoire de travail rotatif.

Toutefois ces appareils sont dépourvus de dispositif de sécurité conditionnant le fonctionnement des sorties d'entrainement à la présence d'un accessoire de travail.

Il y a donc un besoin pour un nouveau type de boitier motorisé d'appareil électroménager de préparation culinaire pouvant gérer deux emplacements dans des conditions de sécurité optimales.

### EXPOSE DE L'INVENTION

Ainsi, il est proposé selon l'invention un boitier motorisé d'appareil électroménager de préparation culinaire conforme à la revendication 1.

Ce boitier motorisé d'appareil électroménager de préparation culinaire ne permet la rotation du moteur que lorsque les conditions de sécurité sont réunies. En effet le moteur est entrainé en rotation seulement si la trappe obture le premier emplacement et le deuxième emplacement, ou si le premier accessoire est agencé dans le premier emplacement, ou si le deuxième accessoire est agencé dans le deuxième emplacement. Dans ce but, le boitier motorisé d'appareil électroménager de préparation culinaire comprend un dispositif unique d'activation permettant de détecter que la trappe obture le premier emplacement et le deuxième emplacement, ou que le premier accessoire est agencé dans le premier emplacement, ou que le deuxième accessoire est agencé dans le deuxième emplacement.

Le dispositif d'activation est de plus compact et peu coûteux, ce qui permet d'avoir un boitier motorisé d'appareil électroménager de préparation culinaire facile à mettre en œuvre, et donc un appareil électroménager de préparation culinaire facile à mettre en œuvre.

Des aspects préférés mais non limitatifs de ce boitier motorisé d'appareil électroménager de préparation culinaire, pris seuls ou en combinaison, sont les suivants :
- le poussoir présente un unique degré de liberté, de type translation, selon un axe de déplacement, par rapport à l'interrupteur.
- le dispositif de détection comprend un support et un moyen de rappel, l'interrupteur étant fixé sur le support, le poussoir étant mobile en translation par rapport au support et le moyen de rappel étant agencé pour que le poussoir soit en position désenclenchée en l'absence d'actionnement du poussoir.
- le moyen de rappel est un ressort, une première extrémité du ressort est en appui sur le support et une deuxième extrémité du ressort étant en appui sur le poussoir.
- le levier présente un degré de liberté, de type translation, par rapport à l'interrupteur, un axe de déplacement du levier étant perpendiculaire à l'axe de déplacement du poussoir ou parallèle à l'axe de déplacement du poussoir.
- le poussoir comprend une première zone d'appui d'accessoire, la première zone d'appui d'accessoire étant agencée pour que, lorsque l'accessoire appuie sur la première zone d'appui d'accessoire par un premier mouvement de rotation autour de l'axe longitudinal de l'accessoire, le poussoir soit déplacé de la position désenclenchée à la position enclenchée.
- la première zone d'appui d'accessoire est plane et inclinée par rapport à l'axe de déplacement du poussoir, un angle entre un axe perpendiculaire à la première zone d'appui d'accessoire et l'axe de déplacement du poussoir étant de préférence compris entre 40° et 50°.
- le poussoir comprend une deuxième zone d'appui d'accessoire, la deuxième zone d'appui d'accessoire étant agencée pour que, lorsque l'accessoire appuie sur la deuxième zone d'appui d'accessoire par un deuxième mouvement de rotation autour de l'axe longitudinal de l'accessoire, le poussoir soit déplacé de la position désenclenchée à la position enclenchée.
- la deuxième zone d'appui d'accessoire est plane et inclinée par rapport à l'axe de déplacement du poussoir, un angle entre un axe perpendiculaire à la deuxième zone d'appui d'accessoire et l'axe de déplacement du poussoir étant de préférence compris entre 40° et 50°.
- le poussoir comprend une zone d'appui de trappe, la zone d'appui de trappe étant agencée pour que, lorsque la trappe appuie sur la zone d'appui de trappe par un mouvement rectiligne suivant l'axe de déplacement du poussoir, le poussoir soit déplacé de la position désenclenchée à la position enclenchée.
- la zone d'appui de trappe est plane et perpendiculaire à l'axe de déplacement du poussoir.
- le poussoir comprenant une zone d'appui de levier, la zone d'appui de levier étant agencée pour que, lorsque le poussoir est déplacé de la position désenclenchée à la position enclenchée, la zone d'appui de levier appuie sur une extrémité du levier de l'interrupteur et le levier de l'interrupteur soit déplacé de la position d'inactivation à la position d'activation.
- la zone d'appui de levier est plane et inclinée, un angle entre un axe perpendiculaire à la zone d'appui de levier et l'axe de déplacement du poussoir est de préférence compris entre 40° et 50°.
- l'interrupteur est un interrupteur électrique, deux bornes de l'interrupteur électrique étant reliées électriquement lorsque le levier est dans la position d'activation.

Un autre aspect de l'invention concerne un appareil électroménager de préparation culinaire comprenant un boitier motorisé comportant un socle présentant une embase ayant une zone d'accueil configurée pour recevoir un récipient de travail, et une tête liée au socle, dans lequel le boîtier motorisé est conforme à l'une au moins des caractéristiques précédentes.

Un autre aspect de l'invention concerne un appareil électroménager de préparation culinaire comprenant un boitier motorisé et un accessoire amovible comportant un outil rotatif prévu pour être entraîné par une sortie d'entrainement du boitier motorisé lorsque l'accessoire amovible est reçu dans un emplacement du boitier motorisé dans lequel est agencé la sortie amovible, dans lequel l'accessoire amovible comporte une embase porte-outil et une partie bol montée amovible sur l'embase porte-outil, et dans lequel le dispositif d'activation est actionné par la partie bol montée sur l'embase porte-outil lorsque l'accessoire amovible est reçu dans un emplacement du boitier motorisé.

### DESCRIPTION DES FIGURES

D'autres caractéristiques et avantages de l'invention ressortiront encore de la description qui suit, laquelle est purement illustrative et non limitative et doit être lue en regard des figures annexées sur lesquelles :
La figure 1 représente un appareil électroménager de préparation culinaire de l'invention.
La figure 2 représente d'une autre manière l'appareil électroménager de préparation culinaire de l'invention.
Les figures 3a et 3b représentent le boitier motorisé selon un aspect de l'invention.
Les figures 4a et 4b représentent le dispositif d'activation selon un aspect de l'invention.
Les figures 5a et 5b représentent d'une autre manière le dispositif d'activation selon un aspect de l'invention.
La figure 6 représente d'une autre manière le dispositif d'activation selon un aspect de l'invention.
La figure 7a représente un bol blender utilisable avec l'appareil électroménager de préparation culinaire de l'invention.
La figure 7b représente un porte-outil amovible du bol blender représenté sur la figure 7a.
La figure 7c représente un réceptacle de bol blender utilisé avec le porte-outil amovible représenté sur la figure 7b pour obtenir le bol blender représenté sur la figure 7a.
La figure 8 représente le bol blender représenté sur la figure 7a couplé avec l'appareil électroménager de préparation culinaire de l'invention.
La figure 9 représente un bol mini-hachoir utilisable avec l'appareil électroménager de préparation culinaire de l'invention.
La figure 10 représente le bol mini-hachoir représenté sur la figure 9 couplé avec l'appareil électroménager de préparation culinaire de l'invention.

### DESCRIPTION DETAILLEE DE L'INVENTION

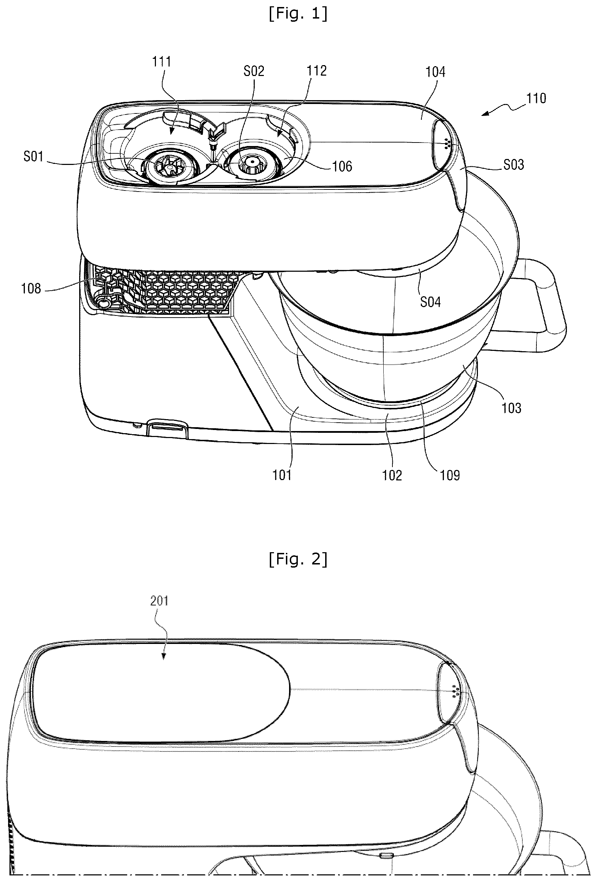

La figure 1 représente un exemple d'appareil électroménager de préparation culinaire 110. L'appareil électroménager de préparation culinaire 110 comprend un boitier motorisé 106 présentant un socle 101 et une tête 104.

Dans l'exemple de réalisation illustré sur les figures, le socle 101, en forme de pied, comporte une embase 102 sensiblement horizontale et un jambage 108 qui s'étend verticalement vers le haut depuis le socle 101. Le socle 101 est destiné à reposer sur un plan de travail horizontal. L'embase 102 comporte une zone d'accueil 109 configurée pour recevoir un récipient de travail 103, ici sous la forme d'une cuve, généralement amovible.

Dans l'exemple de réalisation illustré sur les figures, la tête 104 est articulée sur le socle 101 autour d'un axe horizontal, ici au niveau du jambage 108. La tête 104 présente une forme qui s'étend selon une direction longitudinale, horizontale en position de travail, avec une partie longitudinale arrière par laquelle elle est liée au jambage 108 du socle 101 et une partie longitudinale avant qui s'étend en surplomb au-dessus de l'embase 102 et du récipient de travail 103.

Le boitier motorisé 106 comprend :
- un premier emplacement 111 comprenant une première sortie d'entraînement S01 agencée dans le premier emplacement,
- un deuxième emplacement 112 comprenant une deuxième sortie d'entrainement S02 agencée dans le deuxième emplacement,
- une trappe 201 (représentée sur la figure 2) mobile ou amovible, pouvant occuper une position d'obturation dans laquelle la trappe 201 empêche l'accès au premier emplacement 111 et au deuxième emplacement 112,
- un moteur électrique configuré pour entrainer la première sortie d'entrainement S01 et la deuxième sortie d'entrainement S02.

Le premier emplacement 111 est configuré pour recevoir un premier accessoire amovible comprenant un premier outil rotatif. Lorsque le premier accessoire est agencé dans le premier emplacement 111, généralement la première sortie d'entraînement S01 est en prise avec le premier outil rotatif.

Le deuxième emplacement 112 est configuré pour recevoir un deuxième accessoire amovible comprenant un deuxième outil rotatif. Lorsque le deuxième accessoire est agencé dans le deuxième emplacement 112, généralement la deuxième sortie d'entraînement S02 est en prise avec le deuxième outil rotatif.

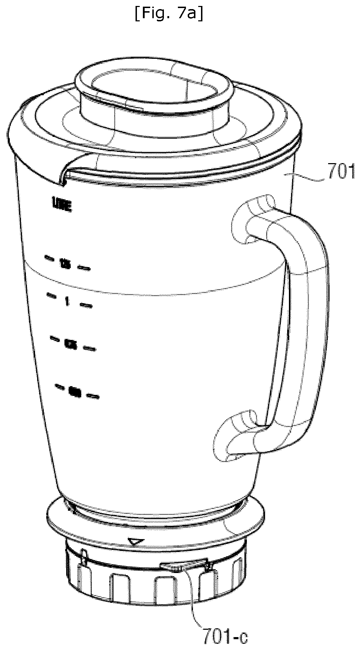

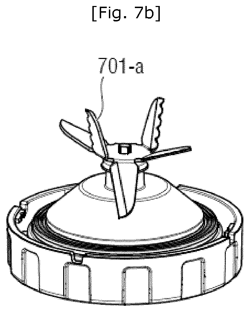

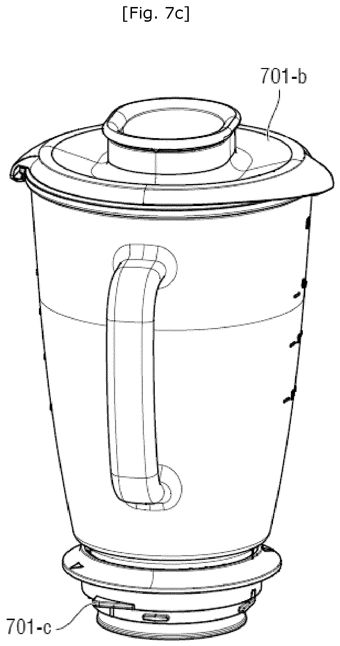

Le premier accessoire est, par exemple, un bol blender 701 représenté sur les figures 7-a à 7-c.

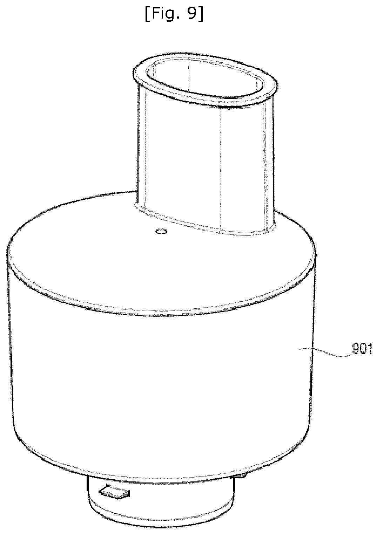

Le deuxième accessoire est, par exemple, un bol mini-hachoir 901, aussi connu sous l'expression anglaise de « food processor », représenté sur la figure 9.

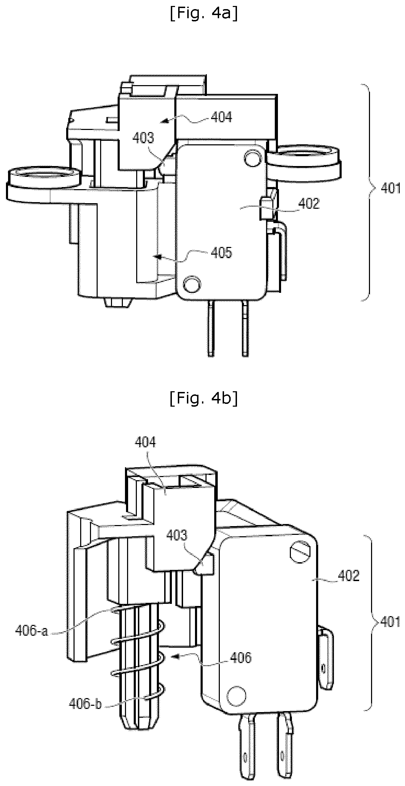

Le boitier motorisé 106 comprend également un dispositif d'activation 401 (représenté sur les figures 4-a, 4-b, 5-a, 5-b et 6) de l'alimentation du moteur électrique. Le dispositif d'activation 401 comprend des moyens pour être commuté dans un état actif :
- lorsque la trappe 201 occupe la position d'obturation, ou
- lorsque le premier accessoire est agencé dans le premier emplacement 111 et que la première sortie d'entraînement S01 est en prise avec le premier outil rotatif, ou
- lorsque le deuxième accessoire est agencé dans le deuxième emplacement 112 et que la deuxième sortie d'entraînement S02 est en prise avec le deuxième outil rotatif.

Dans un exemple de réalisation la commutation dans l'état actif est réalisée seulement lorsque les conditions décrites précédemment sont remplies.

Le moteur agencé à l'intérieur du boitier motorisé 106 comporte un arbre moteur orienté selon un axe moteur qui, suivant les conceptions, peut être horizontal ou vertical. En alternative, le moteur peut être agencé dans le socle 101 ou une autre partie de la tête 104.

La tête 104 peut aussi comprendre une troisième sortie d'entrainement S03 placée sur une face avant de la tête 104 et une quatrième sortie d'entrainement S04 placée sur une face de la tête opposée à la face recevant le boitier motorisé 106.

La première sortie d'entrainement S01, la deuxième sortie d'entrainement S02, la troisième sortie d'entrainement S03 et la quatrième sortie d'entrainement S04 sont agencés pour être entrainés en rotation par le moteur, plus précisément par un arbre de ce moteur. On peut parler de manière équivalente de rotation du moteur ou de rotation de l'arbre du moteur.

Le boitier motorisé 106 peut comprendre un premier coupleur associé au premier emplacement 111 et/ou un deuxième coupleur associé au deuxième emplacement 112.

Le premier coupleur est configuré pour permettre un accouplement et un désaccouplement du premier accessoire et pour assurer que la première sortie d'entraînement S01 soit en prise avec le premier outil rotatif.

Le deuxième coupleur est configuré pour permettre un accouplement et un désaccouplement du deuxième accessoire et pour assurer que la deuxième sortie d'entraînement S02 soit en prise avec le deuxième outil rotatif.

Deux éléments sont liés de manière amovible s'ils peuvent être accouplés et désaccouplés, ou accrochés et décrochés, de manière simple par un utilisateur final de l'appareil électroménager de préparation culinaire 110. Ces opérations pourront se faire de préférence sans outil ou avec l'aide d'un ou plusieurs outil(s) selon un mode opératoire très simple. Le mode opératoire pour accoupler et désaccoupler et/ou pour accrocher et décrocher deux éléments liés de manière amovible comporte de préférence un geste unique, par exemple pousser ou tirer ou tourner ou visser, etc., ou une combinaison de deux gestes tels que pousser-tourner, tirer-visser, pousser-visser, etc. Une liaison amovible est à distinguer d'une liaison démontable. Une liaison démontable est prévue, par exemple, pour permettre des opérations de maintenance ou de réparation sur des organes internes de l'appareil électroménager de préparation culinaire 110. Ces opérations nécessitent généralement des outils et plusieurs opérations successives pour permettre un démontage, elles sont réservées par exemple à un réparateur, en dehors d'une utilisation habituelle de l'appareil électroménager de préparation culinaire 110.

Les coupleurs peuvent être formés d'une série de pattes d'accrochage qui s'étendent depuis l'accessoire de travail et qui sont destinées à s'engager dans les lumières aménagées dans une paroi d'un carter du boitier motorisé 106. Ainsi les pattes d'accrochage coopèrent avec les lumières. De plus, les pattes d'accrochage ou les lumières peuvent comporter des moyens d'encliquetage ou d'emboîtement élastique. Les coupleurs peuvent prendre une autre forme, par exemple la forme d'un accrochage à baïonnette, la forme d'un ou plusieurs crochets d'accrochage, ou la forme d'un pas de vis.

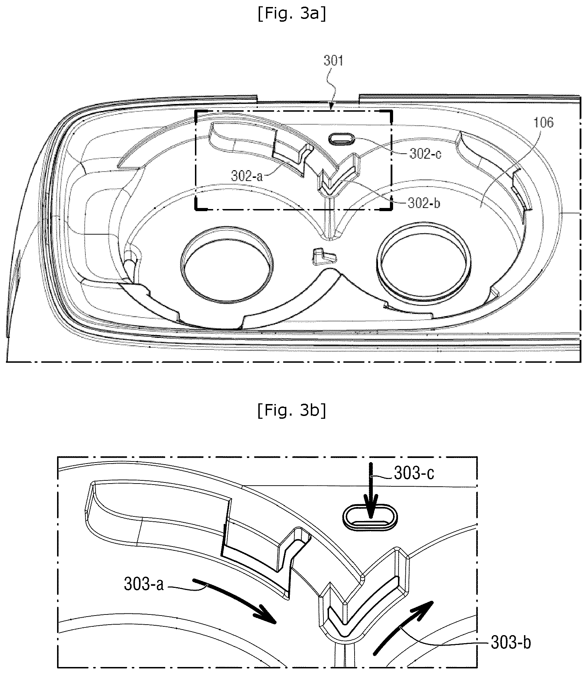

La figure 3a représente d'une autre manière le boitier motorisé 106. Sur cette figure une zone 301 comprend trois lumières 302-a, 302-b et 302-c.

La lumière 302-a est configurée pour qu'une portion, par exemple un ergot, du premier accessoire puisse s'insérer dans cette lumière de manière à entrer en contact avec le dispositif d'activation 401, afin que le dispositif d'activation 401 soit commuté dans un état actif.

La lumière 302-b est configurée pour qu'une portion, par exemple un ergot, du deuxième accessoire puisse s'insérer dans cette lumière de manière à entrer en contact avec le dispositif d'activation 401, afin que le dispositif d'activation 401 soit commuté dans un état actif.

La lumière 302-c est configurée pour qu'une portion, par exemple un ergot, de la trappe 201 puisse s'insérer dans cette lumière de manière à entrer en contact avec le dispositif d'activation 401, afin que le dispositif d'activation 401 soit commuté dans un état actif.

La figure 3b représente, par une première flèche 303-a, le mouvement de rotation qui permet à la portion du premier accessoire de s'insérer dans la lumière 302-a.

La figure 3b représente, par une deuxième flèche 303-b, le mouvement de rotation qui permet à la portion du deuxième accessoire de s'insérer dans la lumière 302-b.

La figure 3b représente, par une troisième flèche 303-c, le mouvement de déplacement rectiligne qui permet à la portion de la trappe 201 de s'insérer dans la lumière 302-c.

Ainsi trois mouvements distincts permettent de commuter dans un état actif le dispositif d'activation 401 (1 mouvement vertical et 2 mouvements de rotation).

Les figures 4a, 4b, 5a, 5b et 6 représentent un exemple de réalisation du dispositif d'activation 401.

Le dispositif d'activation 401 de cet exemple de réalisation offre l'avantage d'être compact et de pouvoir se loger facilement dans la tête 104 de l'appareil électroménager de préparation culinaire 110.

Le dispositif d'activation 401 comprend :
- un interrupteur 402 comprenant un levier 403 mobile entre une position d'activation et une position d'inactivation et
- un poussoir 404 mobile, par rapport à l'interrupteur 402, entre une position désenclenchée et une position enclenchée.

Le dispositif d'activation 401 est actif lorsque le levier 403 est dans la position d'activation.

Généralement l'interrupteur 402 et le poussoir 404 sont agencés ensemble pour que le levier 403 soit dans la position d'activation lorsque le poussoir 404 est dans la position enclenchée et pour que le levier 403 soit dans la position d'inactivation lorsque le poussoir 404 est dans la position désenclenchée.

Dans un exemple de réalisation, l'interrupteur 402 est un interrupteur électrique. Deux bornes de l'interrupteur électrique sont, par exemple, reliées électriquement lorsque le levier 403 est dans la position d'activation.

Dans un exemple de réalisation le poussoir 404 est agencé pour être dans la position enclenchée :
- lorsque la trappe 201 occupe la position d'obturation, ou
- lorsque le premier accessoire est agencé dans le premier emplacement 111 et que la première sortie d'entraînement S01 est en prise avec le premier outil rotatif, ou
- lorsque le deuxième accessoire est agencé dans le deuxième emplacement 112 et que la deuxième sortie d'entraînement S02 est en prise avec le deuxième outil rotatif.

Le poussoir 404 est agencé pour être dans la position désenclenchée lorsque la trappe 201 n'occupe pas la position d'obturation, et que ni le premier accessoire ni le deuxième accessoire ne sont agencés dans respectivement le premier emplacement 111 ou le deuxième emplacement 112.

Dans un exemple de réalisation le poussoir 404 présente un unique degré de liberté, par exemple de type translation, selon un axe de déplacement par rapport à l'interrupteur 402.

Le dispositif de détection 401 peut comprendre un support 405 et un moyen de rappel 406. L'interrupteur 402 est fixé au support 405. Le poussoir 404 est mobile en translation par rapport au support 405. Le moyen de rappel 406 est agencé pour que le poussoir 404 soit en position désenclenchée en l'absence d'actionnement du poussoir 404.

Ce moyen de rappel 406 est dans un exemple de réalisation un ressort. Une première extrémité 406-a du ressort est en appui sur le support 405. Une deuxième extrémité 406-b du ressort est en appui sur le poussoir 404.

Dans un exemple le levier 403 présente un degré de liberté, de type translation, par rapport à l'interrupteur 402. Dans un exemple de réalisation, un axe de déplacement du levier 403 est perpendiculaire à l'axe de déplacement du poussoir 404. Dans un autre exemple de réalisation, un axe de déplacement du levier 403 est parallèle à l'axe de déplacement du poussoir 404.

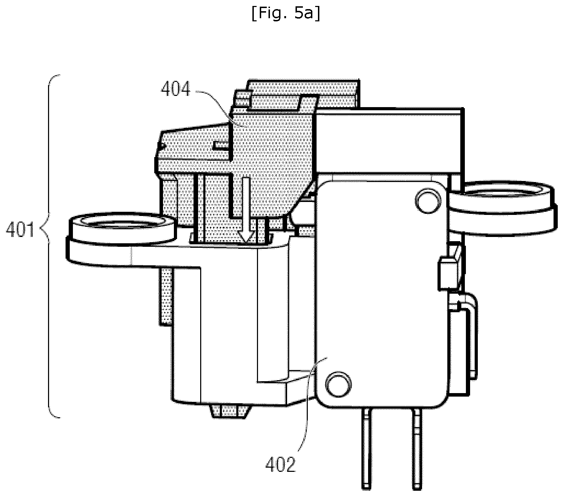

La figure 5a représente l'interrupteur 401 lorsque le poussoir 404 est en position désenclenchée, donc le levier 403 en position désactivée et l'interrupteur 401 en position désactivée.

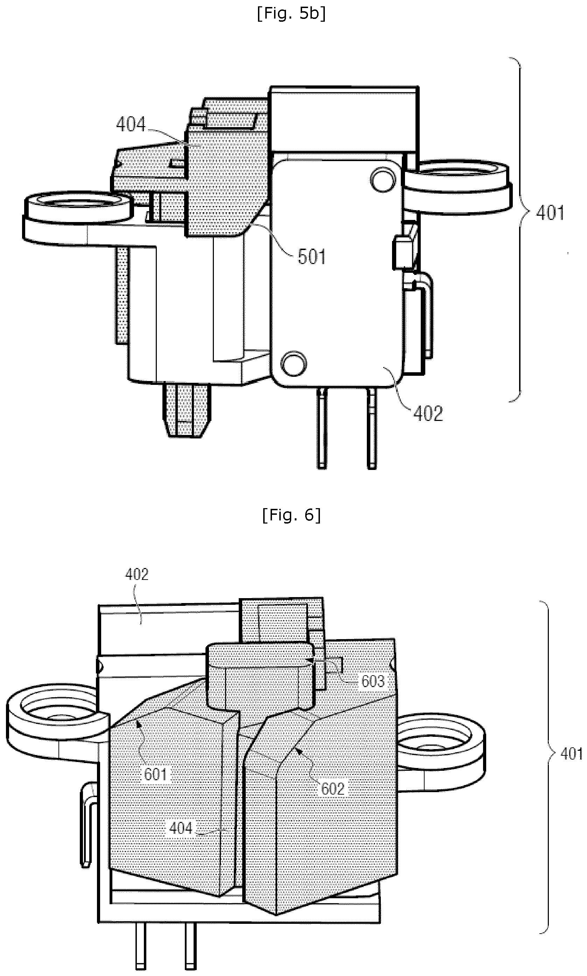

La figure 5b représente l'interrupteur 401 lorsque le poussoir 404 est en position enclenchée, donc le levier 403 en position activée et l'interrupteur 401 en position activée.

Le figure 6 représente un exemple de réalisation du dispositif d'activation 401 dans lequel le poussoir 404 comprend plusieurs zones d'appui.

Par exemple le poussoir 404 peut comprendre une première zone d'appui d'accessoire 601. Cette première zone d'appui d'accessoire 601 peut être agencée pour que, lorsque l'accessoire appuie dessus par un premier mouvement de rotation autour de l'axe longitudinal de l'accessoire, le poussoir 404 soit déplacé de la position désenclenchée à la position enclenchée.

La première zone d'appui d'accessoire 601 est, par exemple, plane et inclinée par rapport à l'axe de déplacement du poussoir. Un angle entre un axe perpendiculaire à la première zone d'appui d'accessoire 601 et l'axe de déplacement du poussoir 404 est de préférence compris entre 40° et 50°.

Ainsi, cette première zone d'appui d'accessoire 601 permet de transformer un mouvement de rotation de l'accessoire en un mouvement de translation rectiligne du poussoir 404. Pour ce faire, l'accessoire peut comprendre un ergot, qui vient s'appuyer sur la première zone d'appui d'accessoire 601 en passant par la première lumière 302-a.

Le poussoir 404 peut aussi comprendre une deuxième zone d'appui d'accessoire 602. Cette deuxième zone d'appui d'accessoire 602 est agencée pour que, lorsque l'accessoire appuie sur la deuxième zone d'appui d'accessoire 602 par un deuxième mouvement de rotation autour de l'axe longitudinal de l'accessoire, le poussoir 404 soit déplacé de la position désenclenchée à la position enclenchée.

La deuxième zone d'appui d'accessoire 602 est, par exemple, plane et inclinée par rapport à l'axe de déplacement du poussoir. Un angle entre un axe perpendiculaire à la deuxième zone d'appui d'accessoire et l'axe de déplacement du poussoir est de préférence compris entre 40° et 50°,

Ainsi, cette deuxième zone d'appui d'accessoire 602 permet de transformer un mouvement de rotation de l'accessoire en un mouvement de translation rectiligne du poussoir 404. Pour ce faire, l'accessoire peut comprendre un ergot, qui vient s'appuyer sur la deuxième zone d'appui d'accessoire 602 en passant par la deuxième lumière 302-b.

Le poussoir 404 peut aussi comprendre une zone d'appui de trappe 603. La zone d'appui de trappe 603 est agencée pour que, lorsque la trappe 201 appuie sur la zone d'appui de trappe 603 par un mouvement rectiligne suivant l'axe de déplacement du poussoir, le poussoir 404 soit déplacé de la position désenclenchée à la position enclenchée.

La zone d'appui de trappe 603 peut, par exemple, être plane et perpendiculaire à l'axe de déplacement du poussoir 404.

Ainsi, cette zone d'appui de trappe 603 permet la transmission d'un mouvement translation rectiligne de la trappe 201 au poussoir 404. Pour ce faire, la trappe 201 peut comprendre un ergot, qui vient s'appuyer sur la deuxième zone d'appui de trappe 603 en passant par la troisième lumière 302-c.

Dans un exemple de réalisation le poussoir 404 comprend une zone d'appui de levier 501 (représentée sur la figure 5b). La zone d'appui de levier 501 est agencée pour que, lorsque le poussoir 404 est déplacé de la position désenclenchée à la position enclenchée, la zone d'appui de levier 501 appuie sur une extrémité du levier 403 de l'interrupteur 402 et le levier 403 de l'interrupteur 402 soit déplacé de la position d'inactivation à la position d'activation.

La zone d'appui de levier 501 est, par exemple, plane et inclinée, un angle entre un axe perpendiculaire à la zone d'appui de levier et l'axe de déplacement du poussoir étant de préférence compris entre 40° et 50°.

La figure 7a représente le bol blender 701 qui peut être agencé dans le premier emplacement 111 de l'appareil électroménager de préparation culinaire 110. Le bol blender 701 comprend une embase porte-outil 701-a (représentée sur la figure 7b) amovible par rapport à une partie bol 701-b (représenté sur la figure 7c). L'embase porte-outil 701-a comporte un outil rotatif, généralement coupant. La partie bol 701-b comprend à sa base des pattes 701-c. Dans l'exemple de réalisation illustré sur les figures, la partie bol 701-b comprend deux pattes 701-c disposées à 180°. Lorsque le bol blender 701 est monté dans le premier emplacement 111 du boitier motorisé 106, l'une des pattes 701-c est engagée dans la lumière 302-b, de sorte que cette patte 701-c actionne le dispositif d'activation 401, l'autre patte étant engagée dans une autre lumière pour maintenir en place le bol blender 701 dans le premier emplacement 111. Ainsi si l'embase porte-outil 701-a est mise en place seule sur le boîtier motorisé 106, sans la partie bol 701-b, l'outil rotatif de l'embase porte-outil 701-a ne peut être entrainé en rotation car l'embase porte outil 701-a ne peut actionner le dispositif de sécurité. En d'autres termes, l'embase porte outil 701-a ne peut entrer en contact avec le dispositif d'activation 401, afin que le dispositif d'activation 401 soit commuté dans un état actif. Seule la partie bol 701-b portant les pattes 701-c peut en contact avec le dispositif d'activation 401, afin que le dispositif d'activation 401 soit commuté dans un état actif.

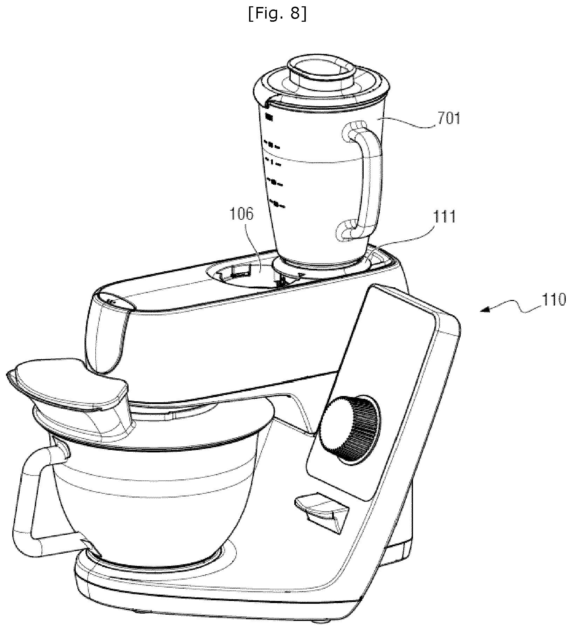

La figure 8 représente le bol blender 701 et l'appareil électroménager de préparation culinaire 110, lorsque le bol blender 701 est agencé dans le premier emplacement 111 de l'appareil électroménager de préparation culinaire 110.

La figure 9 représente le bol mini-hachoir 901 qui peut être agencé dans le deuxième emplacement 112 de l'appareil électroménager de préparation culinaire 110. Dans l'exemple de réalisation illustré sur les figures le bol mini-hachoir 901 présente trois pattes d'actionnement placées à 120°. Lorsque le bol mini-hachoir 901 est monté dans le deuxième emplacement du boitier motorisé, l'une des pattes d'actionnement est engagée dans la lumière 302-b, les autres pattes d'actionnement étant engagées dans d'autres lumières pour maintenir en place le bol mini-hachoir 901 dans le deuxième emplacement 112.

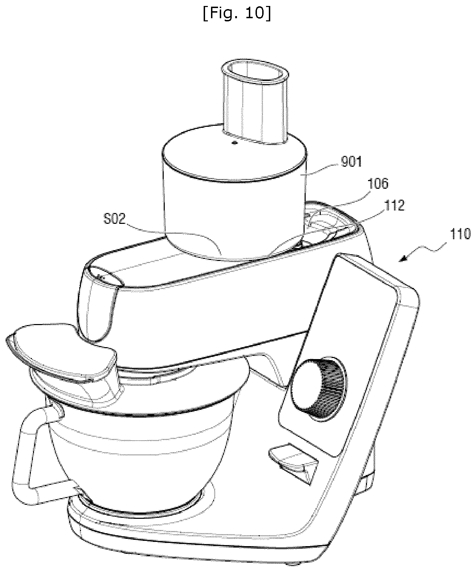

La figure 10 représente le bol mini-hachoir 901 et l'appareil électroménager de préparation culinaire 110, lorsque le bol mini-hachoir 901 est agencé dans le deuxième emplacement 112 de l'appareil électroménager de préparation culinaire 110.

Le bol blender 701 et le bol mini-hachoir 901 se présentent sous la forme d'accessoires prévus pour être entraînés par l'appareil électroménager de préparation culinaire 110. De tels accessoires ont en commun le fait d'avoir une enceinte refermable, délimitant un espace interne fermé destiné à accueillir des aliments à préparer. De tels accessoires comportent un outil coupant rotatif, qui est entrainé en rotation autour d'un axe d'outil généralement vertical. L'outil coupant est contenu dans l'espace interne fermé et présente un moyeu central et au moins une lame coupante s'étendant radialement par rapport à l'axe d'outil depuis le moyeu central. Dans certains exemples de réalisation, cette enceinte refermable peut être formée d'un réceptacle, présentant une ouverture supérieure pour introduire des aliments à préparer, et d'un couvercle amovible, qui est prévu pour refermer l'espace interne fermé dans lequel sont enfermés les aliments à préparer lors du fonctionnement. Dans d'autres exemples de réalisation, cette enceinte refermable peut être formée d'une embase porte-outil et d'une cloche qui vient se raccorder sur l'embase porte-outil pour former l'enceinte refermable en configuration fermée. L'outil coupant est généralement placé près d'une paroi inférieure de l'enceinte refermable, c'est-à-dire près d'une paroi inférieure du réceptacle ou près de l'embase porte-outil. L'outil coupant est généralement porté directement ou indirectement, par exemple par l'intermédiaire d'un coupleur, par cette paroi inférieure. Dans ces accessoires, l'action de découpe des aliments n'est pas due, contrairement à d'autres accessoires ou appareils culinaires, au cisaillement de l'aliment entre une lame et une contre-lame ou autre surface. L'action de découpe des aliments est due à la vitesse de la lame.

Ainsi l'outil coupant du bol blender 701 est entrainé en rotation par la première sortie d'entraînement S01 lorsque le bol blender 701 est agencé dans le premier emplacement 111, et l'outil coupant du bol mini-hachoir 901 est entrainé en rotation par la deuxième sortie d'entrainement S02 lorsque le bol mini-hachoir 901 est agencé dans le deuxième emplacement 112.

## Revendications

1. Boitier motorisé (106) d'appareil électroménager de préparation culinaire (110), le boitier motorisé (106) comprenant :
- un premier emplacement (111) configuré pour recevoir un premier accessoire amovible comprenant un premier outil rotatif, une première sortie d'entraînement (S01) étant agencée dans le premier emplacement (111),
- un deuxième emplacement (112) configuré pour recevoir un deuxième accessoire amovible comprenant un deuxième outil rotatif, une deuxième sortie d'entrainement (S02) étant agencée dans le deuxième emplacement (112),
- une trappe (201) mobile ou amovible pouvant occuper une position d'obturation dans laquelle la trappe (201) empêche l'accès au premier emplacement (111) et au deuxième emplacement (112),
- un moteur électrique configuré pour entrainer la première sortie d'entrainement (S01) et la deuxième sortie d'entrainement (S02), **caractérisé en ce que** le boîtier motorisé (106) comporte un dispositif d'activation (401) de l'alimentation du moteur électrique, le dispositif d'activation (401) comprenant :
- un interrupteur (402) comprenant un levier (403) mobile entre une position d'activation et une position d'inactivation, le dispositif d'activation (401) étant dans un état actif lorsque le levier (403) est dans la position d'activation et
- un poussoir (404) mobile, par rapport à l'interrupteur (402), entre une position désenclenchée et une position enclenchée,
l'interrupteur (402) et le poussoir (404) étant agencés ensemble pour que le levier (403) soit dans la position d'activation lorsque le poussoir (404) est dans la position enclenchée et pour que le levier (403) soit dans la position d'inactivation lorsque le poussoir (404) est dans la position désenclenchée,
le poussoir (404) étant agencé pour être dans la position enclenchée :
- lorsque la trappe (201) occupe la position d'obturation, ou
- lorsque le premier accessoire est agencé dans le premier emplacement (111) et que la première sortie d'entraînement (S01) est en prise avec le premier outil rotatif, ou
- lorsque le deuxième accessoire est agencé dans le deuxième emplacement (112) et que la deuxième sortie d'entraînement (S02) est en prise avec le deuxième outil rotatif,
le poussoir (404) étant agencé pour être dans la position désenclenchée lorsque la trappe (201) n'occupe pas la position d'obturation et que ni le premier accessoire ni le deuxième accessoire ne sont agencés dans respectivement le premier emplacement (111) ou le deuxième emplacement (112).

2. Boitier motorisé (106) selon la revendication 1, dans lequel
le poussoir (404) présente un unique degré de liberté, de type translation, selon un axe de déplacement, par rapport à l'interrupteur (402).

3. Boitier motorisé (106) selon la revendication 2, dans lequel
le dispositif de détection (401) comprend un support (405) et un moyen de rappel (406),
l'interrupteur (402) étant fixé sur le support (405),
le poussoir (404) étant mobile en translation par rapport au support (405) et le moyen de rappel (406) étant agencé pour que le poussoir (404) soit en position désenclenchée en l'absence d'actionnement du poussoir (404).

4. Boitier motorisé (106) selon la revendication 3, dans lequel
le moyen de rappel (406) est un ressort,
une première extrémité du ressort étant en appui sur le support (405) et une deuxième extrémité du ressort étant en appui sur le poussoir (404).

5. Boitier motorisé (106) selon l'une quelconque des revendications 1 à 4, dans lequel
le levier (403) présente un degré de liberté, de type translation, par rapport à l'interrupteur (402),
un axe de déplacement du levier (403) étant :
- perpendiculaire à l'axe de déplacement du poussoir (404) ou
- parallèle à l'axe de déplacement du poussoir (404).

6. Boitier motorisé (106) selon l'une quelconque des revendications 1 à 5, dans lequel
le poussoir (404) comprend une première zone d'appui d'accessoire (601), la première zone d'appui d'accessoire (601) étant agencée pour que, lorsque l'accessoire appuie sur la première zone d'appui d'accessoire (601) par un premier mouvement de rotation autour de l'axe longitudinal de l'accessoire, le poussoir (404) soit déplacé de la position désenclenchée à la position enclenchée.

7. Boitier motorisé (106) selon la revendication 6, dans lequel
la première zone d'appui d'accessoire (601) est plane et inclinée par rapport à l'axe de déplacement du poussoir (404), un angle entre un axe perpendiculaire à la première zone d'appui d'accessoire (601) et l'axe de déplacement du poussoir (404) étant de préférence compris entre 40° et 50°.

8. Boitier motorisé (106) selon l'une quelconque des revendications 6 à 7, dans lequel
le poussoir (404) comprend une deuxième zone d'appui d'accessoire (602), la deuxième zone d'appui d'accessoire (602) étant agencée pour que, lorsque l'accessoire appuie sur la deuxième zone d'appui d'accessoire (602) par un deuxième mouvement de rotation autour de l'axe longitudinal de l'accessoire, le poussoir (404) soit déplacé de la position désenclenchée à la position enclenchée.

9. Boitier motorisé (106) selon la revendication 8, dans lequel
la deuxième zone d'appui d'accessoire (602) est plane et inclinée par rapport à l'axe de déplacement du poussoir (404), un angle entre un axe perpendiculaire à la deuxième zone d'appui d' accessoire (602) et l'axe de déplacement du poussoir (404) étant de préférence compris entre 40° et 50°.

10. Boitier motorisé (106) selon l'une quelconque des revendications 1 à 9, dans lequel
le poussoir (404) comprend une zone d'appui de trappe (603),
la zone d'appui de trappe (603) étant agencée pour que, lorsque la trappe (201) appuie sur la zone d'appui de trappe (603) par un mouvement rectiligne suivant l'axe de déplacement du poussoir (404), le poussoir (404) soit déplacé de la position désenclenchée à la position enclenchée.

11. Boitier motorisé (106) selon la revendication 10, dans lequel la zone d'appui de trappe (603) est de préférence plane et perpendiculaire à l'axe de déplacement du poussoir (404).

12. Boitier motorisé (106) selon l'une quelconque des revendications 1 à 11, dans lequel
le poussoir (404) comprend une zone d'appui de levier (501),
la zone d'appui de levier (501) étant agencée pour que, lorsque le poussoir (404) est déplacé de la position désenclenchée à la position enclenchée, la zone d'appui de levier (501) appuie sur une extrémité du levier (403) de l'interrupteur (402) et le levier (403) de l'interrupteur (402) soit déplacé de la position d'inactivation à la position d'activation.

13. Boitier motorisé (106) selon la revendication 12, dans lequel
la zone d'appui de levier (501) est plane et inclinée, un angle entre un axe perpendiculaire à la zone d'appui de levier (501) et l'axe de déplacement du poussoir (404) étant de préférence compris entre 40° et 50°.

14. Boitier motorisé (106) selon l'une des revendications 1 à 13, dans lequel
l'interrupteur (402) est un interrupteur électrique,
deux bornes de l'interrupteur électrique étant reliées électriquement lorsque le levier (403) est dans la position d'activation.

15. Appareil électroménager de préparation culinaire (110) comprenant un boitier motorisé (106) comportant :
- un socle (101) présentant une embase (102) ayant une zone d'accueil (109) configurée pour recevoir un récipient de travail (103),
- une tête (104) liée au socle (101),
**caractérisé en ce que** le boitier motorisé (106) est conforme à l'une quelconque des revendications 1 à 14.

## Patentansprüche

1. Motorisiertes Gehäuse (106) für ein elektrisches Küchengerät (110), wobei das motorisierte Gehäuse (106) umfasst:
- einen ersten Sitz (111), der zur Aufnahme eines ersten abnehmbaren Zubehörs ausgelegt ist, das ein erstes rotierendes Werkzeug umfasst, wobei in dem ersten Sitz (111) ein erster Antriebsausgang (S01) eingerichtet ist,
- einen zweiten Sitz (112), der zur Aufnahme eines zweiten abnehmbaren Zubehörs ausgelegt ist, das ein zweites rotierendes Werkzeug umfasst, wobei im zweiten Sitz (112) ein zweiter Antriebsausgang (S02) eingerichtet ist,
- eine bewegliche oder abnehmbare Klappe (201), die eine Verschlussposition einnehmen kann, in der die Klappe (201) den Zugang zum ersten Sitz (111) und zum zweiten Sitz (112) verhindert,
- einen Elektromotor, der zum Antreiben des ersten Antriebsausgangs (S01) und des zweiten Antriebsausgangs (S02) ausgelegt ist,
**dadurch gekennzeichnet, dass** das motorisierte Gehäuse (106) eine Vorrichtung (401) zum Aktivieren der Versorgung des Elektromotors aufweist, wobei die Aktivierungsvorrichtung (401) umfasst:
- einen Schalter (402), der einen Hebel (403) umfasst, der zwischen einer Aktivierungsposition und einer Deaktivierungsposition bewegbar ist, wobei die Aktivierungsvorrichtung (401) in einem aktiven Zustand ist, wenn sich der Hebel (403) in der Aktivierungsposition befindet, und
- einen Drücker (404), der relativ zum Schalter (402) zwischen einer ausgerückten Position und einer eingerückten Position beweglich ist,
wobei der Schalter (402) und der Drücker (404) gemeinsam so eingerichtet sind, dass der Hebel (403) in der Aktivierungsposition ist, wenn der Drücker (404) in der eingerückten Position ist, und dass der Hebel (403) in der Deaktivierungsposition ist, wenn der Drücker (404) in der ausgerückten Position ist,
wobei der Drücker (404) eingerichtet ist, in der eingerückten Position zu sein:
- wenn die Klappe (201) die Verschlussposition einnimmt, oder
- wenn das erste Zubehör im ersten Sitz (111) angeordnet ist und wenn der erste Antriebsausgang (S01) mit dem ersten rotierenden Werkzeug in Eingriff steht, oder
- wenn das zweite Zubehör im zweiten Sitz (112) angeordnet ist und wenn der zweite Antriebsausgang (S02) mit dem zweiten rotierenden Werkzeug in Eingriff steht,
wobei der Drücker (404) ausgelegt ist, in der ausgerückten Position zu sein, wenn die Klappe (201) nicht die Verschlussposition einnimmt und wenn weder das erste Zubehör noch das zweite Zubehör im ersten Sitz (111) beziehungsweise im zweiten Sitz (112) angeordnet sind.

2. Motorisiertes Gehäuse (106) nach Anspruch 1, wobei
der Drücker (404) einen einzigen Freiheitsgrad vom Typ Translation gemäß eine Verlagerungsachse relativ zum Schalter (402) aufweist.

3. Motorisiertes Gehäuse (106) nach Anspruch 2, wobei
die Erfassungsvorrichtung (401) einen Halter (405) und ein Rückstellmittel (406) umfasst,
wobei der Schalter (402) am Halter (405) befestigt ist,
wobei der Drücker (404) relativ zum Halter (405) translatorisch beweglich ist und das Rückstellmittel (406) so eingerichtet ist, dass der Drücker (404) bei keiner Betätigung des Drückers (404) in ausgerückter Position ist.

4. Motorisiertes Gehäuse (106) nach Anspruch 3, wobei
das Rückstellmittel (406) eine Feder ist,
ein erstes Ende der Feder auf dem Halter (405) aufliegt und ein zweites Ende der Feder auf dem Drücker (404) aufliegt.

5. Motorisiertes Gehäuse (106) nach einem der Ansprüche 1 bis 4, wobei
der Hebel (403) einen Freiheitsgrad vom Typ Translation relativ zum Schalter (402) aufweist,
wobei eine Verlagerungsachse des Hebels (403) ist:
- senkrecht zur Verlagerungsachse des Drückers (404) oder
- parallel zur Verlagerungsachse des Drückers (404).

6. Motorisiertes Gehäuse (106) nach einem der Ansprüche 1 bis 5, wobei
der Drücker (404) einen ersten Zubehör-Auflagebereich (601) umfasst, wobei der erste Zubehör-Auflagebereich (601) so eingerichtet ist, dass, wenn das Zubehör durch eine erste Drehbewegung um die Längsachse des Zubehörs auf dem ersten Zubehör-Auflagebereich (601) aufliegt, der Drücker (404) aus der ausgerückten Position in die eingerückte Position verlagert wird.

7. Motorisiertes Gehäuse (106) nach Anspruch 6, wobei
der erste Zubehör-Auflagebereich (601) eben und relativ zur Verlagerungsachse des Drückers (404) geneigt ist, wobei ein Winkel zwischen einer senkrechten Achse zum ersten Zubehör-Auflagebereich (601) und der Verlagerungsachse des Drückers (404) vorzugsweise zwischen 40° und 50° liegt.

8. Motorisiertes Gehäuse (106) nach einem der Ansprüche 6 bis 7, wobei
der Drücker (404) einen zweiten Zubehör-Auflagebereich (602) umfasst, wobei der zweite Zubehör-Auflagebereich (602) so eingerichtet ist, dass, wenn das Zubehör durch eine zweite Drehbewegung um die Längsachse des Zubehörs auf dem zweiten Zubehör-Auflagebereich (602) aufliegt, der Drücker (404) aus der ausgerückten Position in die eingerückte Position verlagert wird.

9. Motorisiertes Gehäuse (106) nach Anspruch 8, wobei
der zweite Zubehör-Auflagebereich (602) eben und relativ zur Verlagerungsachse des Drückers (404) geneigt ist, wobei ein Winkel zwischen einer senkrechten Achse zum zweiten Zubehör-Auflagebereich (602) und der Verlagerungsachse des Drückers (404) vorzugsweise zwischen 40° und 50° liegt.

10. Motorisiertes Gehäuse (106) nach einem der Ansprüche 1 bis 9, wobei
der Drücker (404) einen Klappen-Auflagebereich (603) umfasst,
wobei der Klappen-Auflagebereich (603) so eingerichtet ist, dass, wenn die Klappe (201) durch eine geradlinige Bewegung gemäß der Verlagerungsachse des Drückers (404) auf dem Klappen-Auflagebereich (603) aufliegt, der Drücker (404) aus der ausgerückten Position in die eingerückte Position verlagert wird.

11. Motorisiertes Gehäuse (106) nach Anspruch 10, wobei der Klappen-Auflagebereich (603) vorzugsweise eben und senkrecht zur Verlagerungsachse des Drückers (404) ist.

12. Motorisiertes Gehäuse (106) nach einem der Ansprüche 1 bis 11, wobei
der Drücker (404) einen Hebel-Auflagebereich (501) umfasst,
wobei der Hebel-Auflagebereich (501) so eingerichtet ist, dass, wenn der Drücker (404) aus der ausgerückten Position in die eingerückte Position verlagert wird, der Hebel-Auflagebereich (501) auf einem Ende des Hebels (403) des Schalters (402) aufliegt und der Hebel (403) des Schalters (402) aus der Deaktivierungsposition in die Aktivierungsposition verlagert wird.

13. Motorisiertes Gehäuse (106) nach Anspruch 12, wobei
der Hebel-Auflagebereich (501) eben und geneigt ist, wobei ein Winkel zwischen einer senkrechten Achse zum Hebel-Auflagebereich (501) und der Verlagerungsachse des Drückers (404) vorzugsweise zwischen 40° und 50° liegt.

14. Motorisiertes Gehäuse (106) nach einem der Ansprüche 1 bis 13, wobei
der Schalter (402) ein elektrischer Schalter ist,
wobei zwei Anschlüsse des elektrischen Schalters elektrisch verbunden sind, wenn der Hebel (403) in der Aktivierungsposition ist.

15. Elektrisches Küchengerät (110), das ein motorisiertes Gehäuse (106) umfasst, aufweisend:
- einen Sockel (101) mit einer Basis (102), die einen Aufnahmebereich (109) aufweist, der zur Aufnahme eines Arbeitsbehälters (103) ausgelegt ist,
- einen Kopf (104), der mit dem Sockel (101) verbunden ist,
**dadurch gekennzeichnet, dass** das motorisierte Gehäuse (106) nach einem der Ansprüche 1 bis 14 ist.

## Claims

1. Motorized housing (106) of a food preparation household appliance (110), the motorized housing (106) comprising:
• a first location (111) configured to receive a first removable accessory comprising a first rotary tool, a first drive output (S01) being arranged in the first location (111),
• a second location (112) configured to receive a second removable accessory comprising a second rotary tool, a second drive output (S02) being arranged in the second location (112),
• a hatch (201) movable or removable capable of occupying a closing position in which the hatch (201) prevents access to the first location (111) and to the second location (112),
• an electric motor configured to drive the first drive output (S01) and the second drive output (S02),
**characterized in that** the motorized housing (106) comprises a power activation device (401) of the electric motor, the activation device (401) comprising:
• a switch (402) comprising a lever (403) movable between an activation position and a deactivation position, the activation device (401) being in an active state when the lever (403) is in the activation position and
• a pusher (404) movable, relative to the switch (402), between a disengaged position and an engaged position, the switch (402) and the pusher (404) being arranged together so that the lever (403) is in the activation position when the pusher (404) is in the engaged position and so that the lever (403) is in the deactivation position when the pusher (404) is in the disengaged position,
the pusher (404) being arranged to be in the engaged position:
• when the hatch (201) occupies the closing position, or
• when the first accessory is arranged in the first location (111) and the first drive output (S01) is engaged with the first rotary tool, or
• when the second accessory is arranged in the second location (112) and the second drive output (S02) is engaged with the second rotary tool, the pusher (404) being arranged to be in the disengaged position when the hatch (201) does not occupy the closing position and neither the first accessory nor the second accessory are arranged respectively in the first location (111) or the second location (112).

2. Motorized housing (106) according to claim 1, wherein the pusher (404) has a single degree of freedom, of the translation type, along a displacement axis, relative to the switch (402).

3. Motorized housing (106) according to claim 2, wherein the detection device (401) comprises a support (405) and a return means (406),
the switch (402) being fixed on the support (405),
the pusher (404) being translationally movable relative to the support (405) and the return means (406) being arranged so that the pusher (404) is in the disengaged position in the absence of actuation of the pusher (404).

4. Motorized housing (106) according to claim 3, wherein the return means (406) is a spring,
a first end of the spring being supported on the support (405) and a second end of the spring being supported on the pusher (404).

5. Motorized housing (106) according to any one of claims 1 to 4, wherein the lever (403) has a degree of freedom, of the translation type, relative to the switch (402),
a displacement axis of the lever (403) being:
• perpendicular to the displacement axis of the pusher (404) or
• parallel to the displacement axis of the pusher (404).

6. Motorized housing (106) according to any one of claims 1 to 5, wherein the pusher (404) comprises a first accessory bearing area (601), the first accessory bearing area (601) being arranged so that, when the accessory presses on the first accessory bearing area (601) by a first rotational movement around the longitudinal axis of the accessory, the pusher (404) is moved from the disengaged position to the engaged position.

7. Motorized housing (106) according to claim 6, wherein the first accessory bearing area (601) is flat and inclined relative to the displacement axis of the pusher (404), an angle between an axis perpendicular to the first accessory bearing area (601) and the displacement axis of the pusher (404) being preferably between 40° and 50°.

8. Motorized housing (106) according to any one of claims 6 to 7, wherein the pusher (404) comprises a second accessory bearing area (602), the second accessory bearing area (602) being arranged so that, when the accessory presses on the second accessory bearing area (602) by a second rotational movement around the longitudinal axis of the accessory, the pusher (404) is moved from the disengaged position to the engaged position.

9. Motorized housing (106) according to claim 8, wherein the second accessory bearing area (602) is flat and inclined relative to the displacement axis of the pusher (404), an angle between an axis perpendicular to the second accessory bearing area (602) and the displacement axis of the pusher (404) being preferably between 40° and 50°.

10. Motorized housing (106) according to any one of claims 1 to 9, wherein the pusher (404) comprises a hatch bearing area (603), the hatch bearing area (603) being arranged so that, when the hatch (201) presses on the hatch bearing area (603) by a rectilinear movement along the displacement axis of the pusher (404), the pusher (404) is moved from the disengaged position to the engaged position.

11. Motorized housing (106) according to claim 10, wherein the hatch bearing area (603) is preferably flat and perpendicular to the displacement axis of the pusher (404).

12. Motorized housing (106) according to any one of claims 1 to 11, wherein the pusher (404) comprises a lever bearing area (501), the lever bearing area (501) being arranged so that, when the pusher (404) is moved from the disengaged position to the engaged position, the lever bearing area (501) presses on one end of the lever (403) of the switch (402) and the lever (403) of the switch (402) is moved from the deactivation position to the activation position.

13. Motorized housing (106) according to claim 12, wherein the lever bearing area (501) is flat and inclined, an angle between an axis perpendicular to the lever bearing area (501) and the displacement axis of the pusher (404) being preferably between 40° and 50°.

14. Motorized housing (106) according to any one of claims 1 to 13, wherein the switch (402) is an electric switch,
two terminals of the electric switch being electrically connected when the lever (403) is in the activation position.

15. Food preparation household appliance (110) comprising a motorized housing (106) comprising:
• a base (101) having a baseplate (102) with a receiving area (109) configured to receive a working bowl (103),
• a head (104) connected to the base (101),
**characterized in that** the motorized housing (106) is in accordance with any one of claims 1 to 14.
